# EUROPEAN PATENT SPECIFICATION

(11) **EP 0 731 892 B1**
(45) Date of publication and mention of the grant of the patent: **17.01.2001**
(21) Application number: 94904393.9
(22) Date of filing: 29.11.1993
(51) Int. Cl.: F16L 37/088

(54) **CONDUIT COUPLING**
ROHRKUPPLUNG
ENSEMBLE D'ACCOUPLEMENT DE CONDUIT

(43) Date of publication of application: 18.09.1996
(73) Proprietor: PROPRIETARY TECHNOLOGY, INC., Southfield, MI 48037 (US)
(72) Inventor: BARTHOLOMEW, Donald D., Mt. Clemens, MI 48045 (US)
(74) Representative: Price, Nigel John King
(86) International application number: US9311622
(87) International publication number: WO9514879

(56) References cited:
- DE-A- 2 922 869
- US-A- 3 922 011
- US-A- 3 948 548
- US-A- 4 043 685
- US-A- 4 126 335
- US-A- 4 352 586
- US-A- 5 056 756
- US-A- 5 207 462

## Description

In the automotive industry, as well as for many other industries, the need always exists for low cost, reliable and easy to assembly components. This need is especially apparent with respect to providing a connection between fluid conveying conduits such as fuel, brake or refrigerant lines. Traditionally, such a connection is comprised of a male tubular member being retained within a female housing by a threaded fitting, bolted-on flanged brackets or flare fittings.

More recently, snap together quick connect attachments have been used in place of the aforementioned conventional devices. In order to retain such a quick connect fastener, many tubular members have a bead circumferentially located therearound. This bead may be integrally formed or mechanically attached onto the outside surface of the male conduit. Furthermore, it is important that this bead be firmly attached to a predetermined longitudinal position on the male conduit in order to maintain a secure and leak resistant fit within the mating female housing or connector half. If such a connection were to become dislodged or leak, the vehicle could become disabled. While quick connect fasteners are significant improvements within the art, the male conduits used in combination therewith have not adequately provided a low cost and secure sealing seat integral with the male conduit. Furthermore, conventional couplings allow the male conduit to axially move in relation to the adjacent female housing. Therefore, it would be desirable to have a conduit coupling which provides a low cost, longitudinally secure and integral sealing seat on a male conduit which also promotes axial alignment with the mating female housing thereby avoiding the aforementioned problems.

US-A-5,207,462 discloses a conduit coupling comprising a female member having a receptacle with a cylindrical inside surface defining a bore which extends therethrough and defines a longitudinal axis centrally there along; and
a male conduit having a cylindrical cross-sectional shape defined by an exterior surface and a distal edge;
means for sealing externally surrounding said exterior surface of said male conduit; and
a fastener having a first attachment section attached to said male conduit and a second attachment section attachable to said female member,
said male conduit being insertable within said receptacle bore such that said sealing means substantially prevents fluid media from passing between said exterior surface of said male conduit and said inside surface of said female member and said fastener couples a predetermined portion of said male conduit within said female member so as to prevent inadvertent longitudinal disassembly therefrom.

According to the present invention there is provided a conduit coupling for use in communicating a fluid media therethrough, comprising a female member having a receptacle with a cylindrical inside surface thereof defining a bore which extends therethrough and defines a longitudinal axis centrally therealong; and a male conduit having a cylindrical cross-sectional shape, an exterior surface and a distal edge, said male conduit further having a first expanded diametral portion located closest to said distal edge and a second expanded diametral portion displaced longitudinally therealong, said first and second expanded diametral portions separated by a nominal diametral portion longitudinally therebetween; means for sealing externally surrounding said nominal diametral portion of said male conduit; and fastener having a first attachment section attached to said male conduit adjacent to said second expanded diametral portion, said fastener further having a second attachment section attachable to said female member, said male conduit being insertable within said receptacle bore such that said exterior surface of said male conduit at said first and second expanded diametral portions thereof are in registry with said receptacle inside surface with said sealing means substantially preventing fluid media from passing between said exterior surface of said male conduit and said inside surface of said female member and said fastener couples a predetermined portion of said male conduit within said female member so as to prevent inadvertent longitudinal disassembly therefrom.

The conduit coupling of the present invention is advantageous over conventional couplings in that a sealing seat is integrally formed within a male conduit. Thus, a low cost and longitudinally accurate sealing retention area is created. Furthermore, the present invention conduit coupling is also advantageous since a first and second expanded diametral portions on the male conduit also serve as axial alignment bearing surfaces against an inside surface of a female member. An additional benefit is that the conduit coupling of the present invention is longitudinally compact as compared to many traditional attachment systems.

Additional advantages and features of the present invention will become apparent from the following description of embodiments of the present invention given by way of non-limitative example with reference to the accompanying drawings in which:
Fig. 1 is a sectional view showing a first preferred embodiment of a conduit coupling of the present invention;
Fig. 2 is a sectional view showing a second preferred embodiment of a conduit coupling of the present invention;
FIG. 3 is an exploded perspective view of a first alternate embodiment of the present invention conduit coupling of FIG. 2;
FIG. 4 is a sectional view, taken along line 4-4 of FIG. 3, of the first alternate embodiment of the present invention conduit coupling;
FIG. 5 is a sectional view showing a second alternate embodiment of a male conduit and means for sealing of the present invention conduit coupling of FIG. 2;
FIG. 6 is an end elevational view showing a first preferred embodiment of a quick connect fastener used in the present invention conduit coupling of FIGS. 1 and 2; and
FIG. 7 is an end elevational view showing a second preferred embodiment of a quick connect fastener used in the present invention conduit coupling of FIGS. 3 and 4.

A conduit coupling can be used to join a pair of mating tubular members or conduits to one another. For example, a pair of brake, coolant, pneumatic or other flexible hoses may be attached to one another within an automotive vehicle. A conduit coupling can also be used to join a conduit to a fluid carrying structure. For example, a flexible or rigid conduit may be coupled to an engine block, radiator or exhaust pipe.

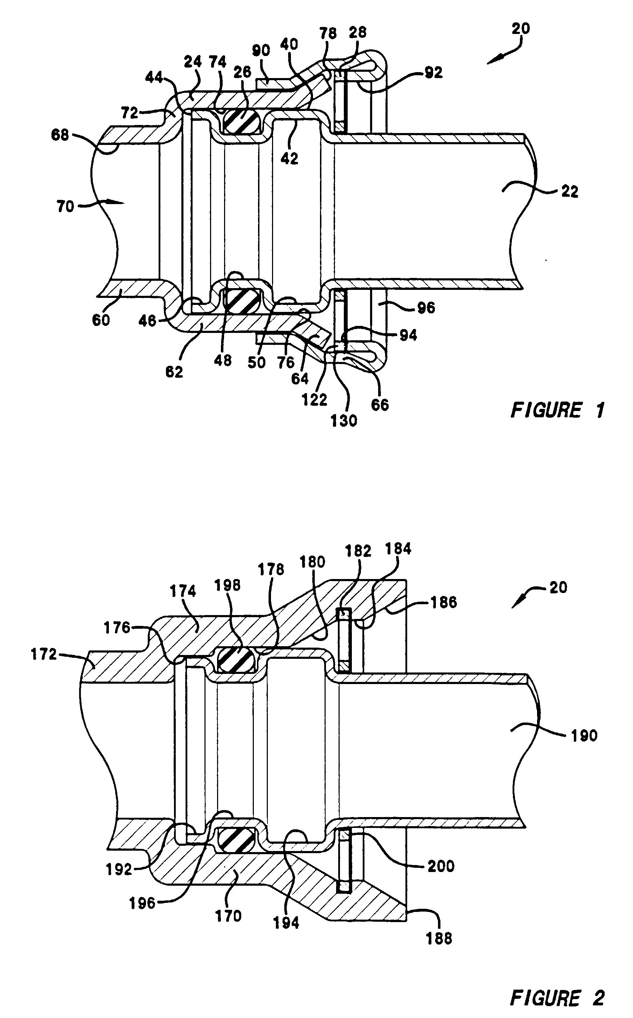

Referring to FIG. 1, a first preferred embodiment of a swivelable conduit coupling 20 is comprised of a male conduit 22, a female member 24, a seal 26 and a quick connect fastener 28. Male conduit 22 is a somewhat rigid metallic member which is securely affixed within the end of a flexible hose (not shown). Male conduit 22 has an exterior surface 40 and an interior surface 42 joined by a distal edge 44. Male conduit 22 also has a first expanded diametral portion 46, a nominal diametral portion 48 and a second expanded diametral portion 50. Each diametral portion 46, 48 and 50 has a substantially cylindrical cross sectional shape thereto. Furthermore, expanded diametral portions 46 and 50 each have substantially the same diameter while the diameter of nominal diametral portion 48 is relatively smaller. Thus, a sealing seat is defined within this radially grooved area.

Female member 24 has a female conduit 60, a receptacle 62, a flange 64 and a collar 66. Female conduit 60 has an inner surface 68 of substantially cylindrical cross sectional shape defining a passageway 70 therethrough. Receptacle 62 is joined to female conduit 60 by a radially projecting ledge 72. Receptacle 62 has an inside surface 74 which defines a substantially cylindrical bore therethrough. Flange 64 has a frusto-conical cross sectional shape with a constricted portion 76 connected to receptacle 62. Flange 64 also has a distal edge 78 which is opposite from constricted portion 76. Collar 66 has a substantially cylindrical body 90 which snugly surrounds a portion of receptacle 62 and flange 64. An arm 92 is inwardly turned from body 90 of collar 66 so as to create a shoulder 94. Collar 66 further has a lead-in portion 96 which defines an open end of female member 24. An inwardly projecting tab or other means may also be incorporated within collar 66 to prevent longitudinal misplacement along receptacle 62.

Seal 26 is preferably an elastomeric O-ring which is preassembled to male conduit 22 within the sealing seat defined by portions 46, 48 and 50 of male conduit 22. However, seal 26 could alternatively consist of a closed cell sponge-like material, a pumpable sealant, a thumb grade sealant, or other sealing means known to one skilled in the art.

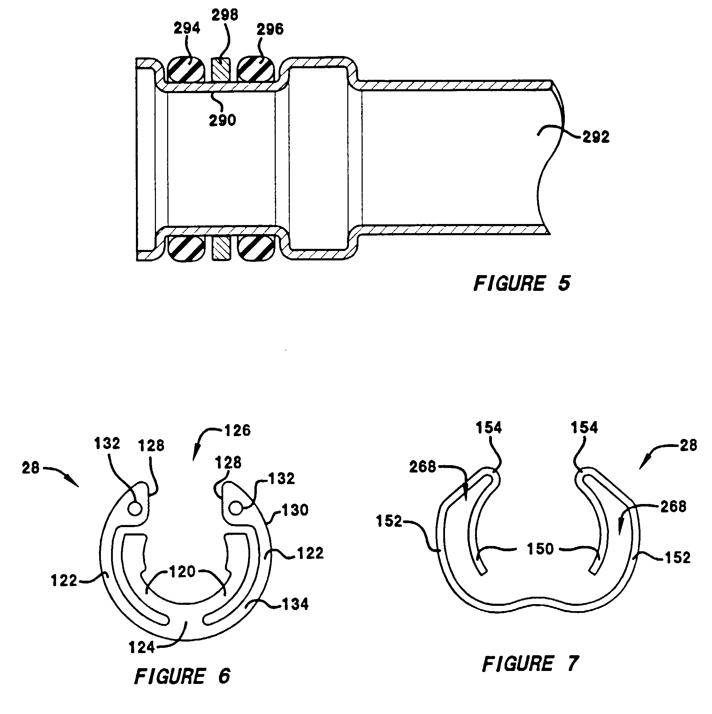

As can best be observed in FIGS. 1 and 6, quick connect fastener 28 is a flat washer-like device having a pair of central jaws 120, also known as a central attachment section, and a pair of outer jaws 122, also known as an outer attachment section. Central jaws 120 and outer jaws 122 are connected to each other through a neck section 124. Furthermore, central jaws 120 define a substantially semi-circular shape therebetween which is compressibly affixed around exterior surface 40 of male conduit 22 longitudinally adjacent to second expanded diametral portion 50 thereof opposite from distal edge 44. Outer jaws 122 create a substantially circular shape substantially concentric with central jaws 120. However, a gap 126 is located between a distal end 128 of each outer jaw 122. Moreover, a peripheral edge 130 of outer jaws 122 is inwardly compressed by lead-in portion 96 and inwardly turned arm 92 of collar 66 when quick connect fastener 28 is longitudinally inserted within female member 24. Insertion may be further enhanced through use of a tool (not shown) which can be inserted within openings 132 in outer jaws 122. When fully inserted, outer jaws 122 are outwardly urged such that a face 134 thereof abuts against shoulder 94 of collar 66. Quick connect fastener 28 is made from a sheet of strip stock steel.

When male conduit 22 is fully inserted within receptacle 62, expanded diametral portions 46 and 50 provide bearing surfaces which inhibit axial misalignment in relation to female member 24. Furthermore, the sealing seat created between portions 46, 48 and 50 of male conduit 22 accurately control the radial compression and longitudinal location of seal 26.

A second preferred embodiment of a quick connect fastener 28 is shown in FIG. 7. This fastener 28 is formed from a semi-flexible wire and has a pair of central jaws 150, also known as a central attachment section, and a pair of outer jaws 152, also known as an outer attachment section. Central jaws 150 and outer jaws 152 are connected to each other through elbow sections 154. Central jaws 150 compressibly engage male conduit 22 (see FIG. 1) and outer jaws 152 engage collar 66 (see FIG. 1) of female member 24 (see FIG. 1).

A second preferred embodiment of conduit coupling 20 of the present invention is shown in FIG. 2. A female member 170 has a female conduit 172 and a female receptacle 174. Female receptacle 174 is defined by a first inside surface 176 and a longitudinally adjacent second inside surface 178. First inside surface 176 has a relatively smaller substantially cylindrical cross sectional diameter as compared to second inside surface 178 which also has a substantially cylindrical cross sectional shape. Receptacle 174 further has a chamfered surface 180, a grooved undercut 182, an intermediate surface 184 and a tapered lead-in surface 186. Tapered lead-in surface 186 is proximate with an open end 188 of female member 170. In this embodiment, a male conduit 190 is substantially similar to that of the first preferred embodiment, however, a first expanded diametral portion 192 has a diameter congruent with first inside surface 176 of female member 170. Also, a second expanded diametral portion 194 of male conduit 190 has a diameter congruent with second inside surface 178 of female member 170. Accordingly, the diameter of second expanded diametral portion 194 is greater than that of first expanded diametral portion 192. Nevertheless, a nominal diametral portion 196 acts in concert with the adjacent expanded diametral portions 192 and 194 to provide a sealing seat for a seal 198. A quick connect fastener 200 is used to couple male conduit 190 to undercut 182 of female member 170.

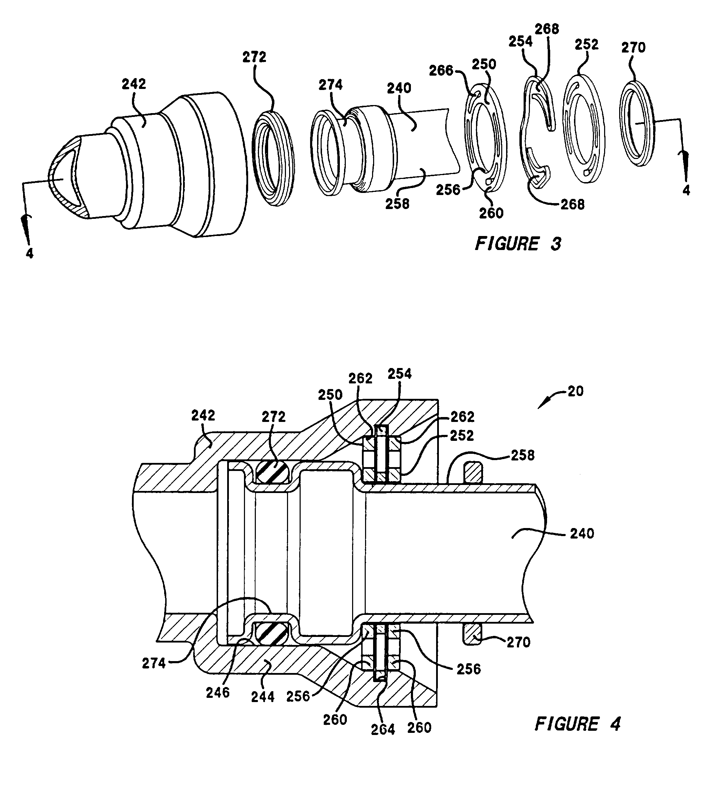

In FIGS. 3 and 4 an alternate embodiment of the present invention conduit coupling 20 is shown. In this embodiment, a male conduit 240 is identical to that of the first preferred embodiment. Furthermore, a female member 242 is similar to that disclosed in the second preferred embodiment except that a receptacle 244 has a substantially uniform inside surface 246. This exemplary embodiment illustrates the use of a first auxiliary attachment ring 250 and a second auxiliary attachment ring 252 in combination with a quick connect fastener 254. Quick connect fastener 254 is similar in design to that shown in FIG. 7.

Both auxiliary attachment rings 250 and 252 are annular in shape and have an inner attachment section 256 which compressibly engages around an exterior surface 258 of male conduit 240. Auxiliary attachment rings 250 and 252 further have an outer attachment section 260 which snugly rides against a pair of intermediate cylindrical surfaces 262 longitudinally bordering an undercut groove 264 within female member 242. Quick connect fastener 254 is longitudinally trapped between the pair of auxiliary attachment rings 250 and 252. This construction allows quick connect fastener 254 to be made from a more radially resilient and less longitudinally rigid material as compared to the prior embodiments. This is accomplished by allowing the pair of auxiliary attachment rings 250 and 252 to longitudinally support quick connect fastener 254. Furthermore, four arcuate slots 266 are located between inner and outer attachment sections 256 and 260, respectively, of auxiliary attachment rings 250 and 252 such that installation or disassembly tools can be inserted within spaces 268 of quick connect fastener 254. An annular bushing 270 can optionally surround exterior surface 258 of male conduit 240 proximate with second auxiliary attachment ring 252. This bushing 270 aids in ensuring the desired longitudinal location of quick connect fastener 254 during insertion thereof within female member 242. An O-ring seal 272 surrounds a nominal diametral portion 274 of male conduit 240.

Referring to FIG. 5, a nominal diametral portion 290 of a male conduit 292 is longitudinally lengthened so as to provide a sealing seat for a pair of O-ring type seals 294 and 296 with a washer 298 longitudinally located therebetween. Of course, one skilled in the art would appreciate that various alternating patterns of expanded diametral portions and nominal diametral portions can be longitudinally positioned along a male conduit without deviating from the present claims.

While various embodiments of this conduit coupling have been disclosed, it will be appreciated that various modifications may be made without departing from the present claims. Furthermore, a non-quick connect fastener such as a bolted-on flange or threaded fitting fastener can be used to join a male conduit to a female member. Various materials have been disclosed in an exemplary fashion, however, a variety of other materials may of course be employed.

## Claims

1. A conduit coupling (20) for use in communicating a fluid media therethrough, comprising:
a female member (24, 170, 242) having a receptacle (62, 174, 244) with a cylindrical inside surface (74; 176, 178, 246) thereof defining a bore which extends therethrough and defines a longitudinal axis centrally therealong; and
a male conduit (22, 190, 240, 292) having a cylindrical cross-sectional shape, an exterior surface (40, 258) and a distal edge (44), said male conduit further having a first expanded diametral portion (46, 192) located closest to said distal edge (44) and a second expanded diametral portion (50, 194) displaced longitudinally therealong, said first and second expanded diametral portions separated by a nominal diametral portion (48, 196, 274, 290) longitudinally therebetween;
means (26; 198; 272; 294, 296) for sealing externally surrounding said nominal diametral portion (48, 196, 274, 290) of said male conduit (22, 190, 240, 292); and
a fastener (28, 200) having a first attachment section (120, 150) attached to said male conduit (22, 190, 240, 292) adjacent to said second expanded diametral portion (50, 194), said fastener (28, 200) further having a second attachment section (122, 152) attachable to said female member,
said male conduit (22, 190, 240, 292) being insertable within said receptacle bore such that said exterior surface (40, 258) of said male conduit (22, 190, 240, 292) at said first and second expanded diametral portions (46, 192; 50, 194) thereof are in registry with said receptacle inside surface (74; 176, 178; 246) with said sealing means (26; 198; 272; 294, 296) substantially preventing fluid media from passing between said exterior surface (40, 258) of said male conduit (22, 190, 240, 292) and said inside surface (74; 176, 178; 246) of said female member (24, 170, 242) and said fastener (28, 200, 254) couples a predetermined portion of said male conduit (22, 190, 240, 292) within said female member (24, 170, 242) so as to prevent inadvertent longitudinal disassembly therefrom.

2. A conduit coupling according to claim 1, wherein said fastener (28, 200, 254) has a quick connect configuration.

3. A conduit coupling according to claim 2, wherein said quick connect fastener (28, 200, 254) includes:
said first attachment section configured as a pair of inner jaws (120) defining a substantially semi-circular shape therebetween, said inner jaws (120) compressibly attaching to said exterior surface (40, 258) of said male conduit (22, 190, 240, 292) substantially therearound; and
said second attachment section configured as a pair of outer jaws (122) substantially surrounding said pair of inner jaws (120), said pair of outer jaws (122) substantially defining a circular shape therebetween, said pair of outer jaws (122) connecting to said pair of inner jaws (120) by a neck segment therebetween (124) said pair of outer jaws (122) further having a pair of distal ends with a gap (126) therebetween, said pair of outer jaws (122) coupling to said female member (24, 170, 242).

4. A conduit coupling according to claim 2, wherein said quick connect fastener (28, 200, 254) includes:
said first attachment section configured from a pair of inner jaws (150) defining a substantially semi-circular shape therebetween, said inner jaws (150) compressibly attaching to said exterior surface (40, 258) of said male conduit (22, 190, 240, 292) substantially therearound; and
said second attachment section configured from a pair of outer jaws (152) substantially surrounding said pair of inner jaws (150), said pair of outer jaws (152) substantially defining a circular shape therebetween, said pair of outer jaws (152) joined to said pair of inner jaws (150) at an elbow (154) thereof.

5. A conduit coupling according to claim 3 or 4, wherein said fastener (254) includes:
a first auxiliary attachment ring (250) having an inner attachment section (256) engageable around said exterior surface (258) of said male conduit (240) and having an outer section (260) substantially surrounding said inner attachment section (256), said first auxiliary ring (250) being longitudinally located between said pair of inner jaws (120, 150) of said quick connect fastener (254) and said second diametrally expanded portion of said male conduit (240); and
a second auxiliary attachment ring (252) having an inner attachment section (256) engageable around said exterior surface (258) of said male conduit (240) and having an outer section (260) substantially surrounding said inner attachment section (256), said second auxiliary attachment (252) being longitudinally located adjacent to said pair of inner jaws (120, 150) of said fastener (254) opposite from said first auxiliary attachment ring (250) thereacross.

6. A conduit coupling according to claim 5, wherein said first and second auxiliary attachment rings (250, 252) have a substantially annular shape and have a plurality of arcuate slots (266) juxtapositioned between each of said inner attachment sections (256) and each of said outer sections (260).

7. A conduit coupling according to any one of the preceding claims, wherein said sealing means includes a first seal (26, 198, 272, 294) located externally adjacent to said nominal portion (290) of said male conduit (292).

8. A conduit coupling according to claim 7, wherein said sealing means further includes a further seal (296) located externally adjacent to said nominal portion (290) of said male conduit (292).

9. A conduit coupling according to claim 8, further comprising a washer (298) located between said first and second seals (294, 296) adjacent thereto.

10. A conduit coupling according to any one of the preceding claims, wherein:
said inside surface of said female member (170) is further defined by a first inside surface (176) and a second inside surface (178), said second inside surface (178) being closer to said open end of said female member (170) than said first inside surface (176) longitudinally adjacent thereto; and
said first expanded diametral portion (192) of said male conduit (190) has a diameter thereof congruent with said first inside surface (176) of said female member (170), said second expanded diametral portion (194) has a relatively greater diameter congruent with said second inside surface (178) of said female member (170).

11. A conduit coupling according to any one of the preceding claims, wherein said female member (24) includes:
a receptacle (62) having a flange (64) therearound closest to an open end thereof; and
a collar (66) fitting around said receptacle (62) proximate with said flange (64), said collar (66) further having an inwardly turned arm (92) defining a shoulder (94),
said second attachment section (122, 152) of said fastener being couplable between said flange (64) and said shoulder (94) of said collar (66).

12. A conduit coupling according to any one of the preceding claims, wherein said female member (170) includes:
a frusto-conical tapered lead-in surface (186) proximate with an open end of said female member (170) and having a constricted portion;
an intermediate inside surface (184) juxtapositioned longitudinally adjacent to said constricted portion of said tapered lead-in surface (186); and
a grooved undercut (182) extending radially outward from said intermediate surface (184),
said second attachment section (122, 152) of said fastener (200) being radially compressible by said tapered lead-in surface (186) during longitudinal insertion therepast, and said second attachment section of (122, 152) of said fastener (200) engaging said undercut (182) when longitudinally located therewith.

13. A conduit coupling according to any one of the preceding claims, further comprising means (270) for preventing longitudinal translation of said quick connect fastener along said male conduit (240).

14. A conduit coupling according to claim 13, wherein said preventing means includes an annular bushing (270) longitudinally affixed around said exterior surface of said male conduit (240).

## Patentansprüche

1. Leitungskupplung (20) zum Durchleiten eines Fluids, umfassend:
ein Aufnahmeglied (24, 170, 242) mit einer Buchse (62, 174, 244), die eine zylindrische Innenfläche (74; 176, 178, 246) aufweist, die eine Bohrung definiert, welche sich durch die Buchse hindurch erstreckt und entlang dieser eine zentrale Längsachse definiert; und
eine Einsteckleitung (22, 190, 240, 292) mit einer zylindrischen Querschnittsform, einer Außenfläche (40, 258) und einem Stirnrand (44), wobei die Einsteckleitung außerdem einen ersten aufgeweiteten Durchmesserabschnitt (46, 192) in engster Nachbarschaft zu dem Stirnrand (44) und einen zweiten aufgeweiteten Durchmesserabschnitt (50, 194), in Längsrichtung versetzt, aufweist, wobei der erste und der zweite aufgeweitete Durchmesserabschnitt voneinander durch einen Nenndurchmesserabschnitt (48, 196, 274, 290) in Längsrichtung voneinander getrennt sind;
eine Einrichtung (26; 198; 272; 294, 296) zum Abdichten, welche den Nenndurchmesserabschnitt (48, 196, 274, 290) der Einsteckleitung (22, 190, 240, 292) außen umgibt; und
einen Befestiger (28, 200) mit einem ersten Befestigungsabschnitt (120, 150), der an der Einsteckleitung (22, 190, 240, 292) benachbart zu dem zweiten aufgeweiteten Durchmesserabschnitt (50, 194) angebracht ist,
wobei der Befestiger (28, 200) außerdem einen zweiten Befestigungsabschnitt (122, 152) aufweist, der an dem Aufnahmeglied befestigbar ist,
wobei die Einsteckleitung (22, 190, 240, 292) in die Buchsen-Bohrung derart einführbar ist, daß die Außenfläche (40, 258) der Einsteckleitung (22, 190, 240, 292) an dem ersten und dem zweiten aufgeweiteten Durchmesserabschnitt (46, 192; 50, 194) mit der Buchsen-Innenfläche (74; 176, 178; 246) fluchtet, wobei die Dichtungseinrichtung (26; 198; 272; 294, 296) im wesentlichen verhindert, daß Fluid zwischen der Außenfläche (40, 258) der Einsteckleitung (22, 190, 240, 292) und der Innenfläche (74; 176, 178, 246) des Aufnahmeglieds (24, 170, 242) hindurchgelangt, und der Befestiger (28, 200, 254) einen vorbestimmten Abschnitt der Einsteckleitung (22, 190, 240, 292) innerhalb des Aufnahmeglieds (24, 170, 242) derart koppelt, daß ihr unbeabsichtigtes Lösen in Längsrichtung von letzterem verhindert ist.

2. Leitungskupplung nach Anspruch 1, bei der der Befestiger (28, 200, 254) eine Schnellverschlußkonfiguration aufweist.

3. Leitungskupplung nach Anspruch 2, bei der der Schnellverschluß-Befestiger (28, 200, 254) beinhaltet:
einen ersten Befestigungsabschnitt, konfiguriert als Paar innerer Klauen (120), die zwischen sich eine etwa halbkreisförmige Form definieren, wobei die inneren Klauen (120) unter Druck an der Außenfläche (40, 258) der Einsteckleitung (22, 190, 240, 292), diese im wesentlichen umgebend, angebracht sind; und
wobei der zweite Befestigungsabschnitt als Paar äußerer Klauen (122) konfiguriert ist, die das Paar innerer Klauen (120) im wesentlichen umgeben und im wesentlichen eine Kreisform zwischen sich definieren, wobei das Paar äußerer Klauen (122) mit dem Paar innerer Klauen (120) über ein dazwischen liegendes Stegsegment (124) verbunden ist und das Paar äußerer Klauen (122) außerdem ein Paar freier Enden mit einer dazwischen befindlichen Lücke (126) aufweist und das Paar äußerer Klauen (122) an dem Aufnahmeglied (24, 170, 242) ankoppelt.

4. Leitungskupplung nach Anspruch 2, bei der der Schnellverschluß-Befestiger (28, 200, 254) beinhaltet:
einen ersten Befestigungabschnitt, konfiguriert durch ein Paar innerer Klauen (150), die zwischen sich eine im wesentlichen halbkreisförmige Form bilden und unter Druck an der Außenfläche (40, 258) der Einsteckleitung (22, 190, 240, 292), diese im wesentlichen umgebend, befestigt sind; und
wobei der zweite Befestigungsabschnitt aus einem Paar äußerer Klauen (152) konfiguriert ist, welches das Paar innerer Klauen (150) im wesentlichen umgibt und im wesentlichen eine Kreisform zwischen sich definiert, wobei das Paar äußerer Klauen (152) mit dem Paar innerer Klauen (150) an einem dazugehörigen Ellenbogen (124) verbunden ist.

5. Leitungskupplung nach Anspruch 3 oder 4, bei der der Befestiger (254) aufweist:
einen ersten Hilfsbefestigungsring (250) mit einem inneren Befestigungsabschnitt (256), der um die Außenfläche (258) der Einsteckleitung (240) herum in Eingriff bringbar ist und einen Außenabschnitt (260) aufweist, welcher den inneren Befestigungsabschnitt (256) im wesentlichen umgibt, wobei der erste Hilfsring (250) in Längsrichtung zwischen dem Paar von inneren Klauen (120, 150) des Schnellverschluß-Befestigers (254) und dem zweiten aufgeweiteten Durchmesserabschnitt der Einsteckleitung (240) gelegen ist; und
einen zweiten Hilfsbefestigungsring (252) mit einem inneren Befestigungsabschnitt (256), der an der Außenfläche (258) der Einsteckleitung (240) in Eingriff bringbar ist und einen Außenabschnitt (260) besitzt, der im wesentlichen den inneren Befestigungsabschnitt (256) umgibt, wobei die zweite Hilfsbefestigung (252) in Längsrichtung betrachtet in der Nachbarschaft zu dem Paar von inneren Klauen (120, 150) des Befestigers (254) abgewandt von dem ersten Hilfsbefestigungsring (250) angeordnet ist.

6. Leitungskupplung nach Anspruch 5, bei der der erste und der zweite Hilfsbefestigungsring (250, 252) eine im wesentlichen ringförmige Form aufweisen und eine Mehrzahl von gekrümmten Schlitzen (266) besitzen, die zwischen jedem der inneren Befestigungsabschnitte (256) und jedem der Außenabschnitte (260) benachbart angeordnet sind.

7. Leitungskupplung nach einem der vorhergehenden Ansprüche, bei der die Dichtungseinrichtung eine erste Dichtung (26, 198, 272, 294) aufweist, die außen benachbart zu dem Nenndurchmesserabschnitt (290) der Einsteckleitung (292) angeordnet ist.

8. Leitungskupplung nach Anspruch 7, bei der die Dichtungseinrichtung außerdem eine weitere Dichtung (296) aufweist, die außen benachbart zu dem Nenndurchmesserabschnitt (290) der Einsteckleitung (292) angeordnet ist.

9. Leitungskupplung nach Anspruch 8, weiterhin umfassend eine Beilagscheibe (298), die sich zwischen der ersten und der zweiten Dichtung (294, 296) in deren Nachbarschaft befindet.

10. Leitungskupplung nach einem der vorhergehenden Ansprüche, bei der
die Innenfläche des Aufnahmeglieds (170) zusätzlich definiert wird durch eine erste Innenfläche (176) und eine zweite Innenfläche (178), von denen die zweite Innenfläche (178) dem offenen Ende des Aufnahmeglieds (170) näher liegt als die erste Innenfläche (176), die jener in Längsrichtung benachbart ist; und
der erste aufgeweitete Durchmesserabschnitt (192) der Einsteckleitung (190) einen Durchmesser besitzt, der kongruent ist zu der ersten Innenfläche (176) des Aufnahmeglieds (170), während der zweite aufgeweitete Durchmesserabschnitt (194) einen relativ größeren Durchmesser aufweist, kongruent mit der zweiten Innenfläche (178) des Aufnahmeglieds (170).

11. Leitungskupplung nach einem der vorhergehenden Ansprüche, bei der das Aufnahmeglied (24) aufweist:
eine Buchse (62) mit einem diese umgebenden Flansch (64) in nächster Nähe ihres offenen Endes; und
einen Kragen (66), der die Buchse (62) nahe dem Flansch (64) passend umgibt und außerdem einen nach innen gewendeten Arm (92) aufweist, der eine Schulter (94) bildet,
wobei der zweite Befestigungsabschnitt (122, 152) des Befestigers zwischen den Flansch (64) und die Schulter (94) des Kragens (66) koppelbar ist.

12. Leitungskupplung nach einem der vorhergehenden Ansprüche, bei der das Aufnahmeglied (170) enthält:
eine sich kegelstumpfförmig verjüngende Einführfläche (186) nahe einem offenen Ende des Aufnahmeglieds (170) mit einer Einschnürung;
eine Zwischen-Innenfläche (184), benachbart in Längsrichtung neben der Einschnürung der sich verjüngenden Einführfläche (186) gelegen; und
eine genutet ausgebildete Hinterschneidung (182), die sich in radialer Richtung von der Zwischenfläche (184) aus nach außen erstreckt,
wobei der zweite Befestigungsabschnitt (122, 152) des Befestigers (200) radial von der sich verjüngenden Einführfläche (186) während einer Einführung in Längsrichtung an ihr entlang zusammendrückbar ist und der zweite Befestigungsabschnitt (122, 152) des Befestigers (200) mit der Hinterschneidung (182) in Eingriff tritt, wenn er mit ihm in Längsrichtung fluchtet.

13. Leitungskupplung nach einem der vorhergehenden Ansprüche, außerdem umfassend eine Einrichtung (70) zum Verhindern einer Längs-Translation des Schnellverschluß-Befestigers entlang der Einsteckleitung (240).

14. Leitungskupplung nach Anspruch 13, bei der die Verhinderungseinrichtung eine Ringbuchse (270) aufweist, die in Längsrichtung um die Außenfläche der Einsteckleitung (240) herum fixiert ist.

## Revendications

1. Ensemble d'accouplement de conduit (20) à utiliser pour faire circuler un agent fluide au travers, comprenant :
un élément femelle (24, 170, 242) ayant un logement (62, 174, 244) avec une surface intérieure cylindrique (74 ; 176, 178, 246) qui définit un alésage qui s'étend au travers et définit un axe longitudinal le long de celui-ci ; et
un conduit mâle (22, 190, 240, 292) ayant une section transversale de forme cylindrique, une surface extérieure (40, 258) et un bord distal (44), ledit conduit mâle comprenant en outre une première partie de diamètre élargi (46, 192) située tout près dudit bord distal (44) et une deuxième partie de diamètre élargi (50, 194) décalée dans le sens de sa longueur, lesdites première et deuxième parties de diamètre élargi étant séparées par une partie de diamètre nominal (48, 196, 274, 290) située entre elles ;
des moyens (26 ; 198 ; 272 ; 294, 296) pour entourer extérieurement de façon étanche ladite partie de diamètre nominal (48, 196, 274, 290) dudit conduit mâle (22, 190, 240, 292) ; et
une attache (28, 200) ayant une première section de fixation (120, 150) fixée audit conduit mâle (22, 190, 240, 292) de façon adjacente à ladite deuxième partie de diamètre élargi (50, 194), ladite attache (28, 200) comprenant en outre une deuxième section de fixation (122, 152) pouvant être fixée audit élément femelle,
ledit conduit mâle (22, 190, 240, 292) pouvant être inséré à l'intérieur dudit alésage de logement de sorte que ladite surface extérieure (40, 258) dudit conduit mâle (22, 190, 240, 292) au niveau de ses première et deuxième parties de diamètre élargi (46, 192 ; 50, 194) est en correspondance avec ladite surface intérieure de logement (74 ; 176, 178 ; 246), lesdits moyens d'étanchéité (26 ; 198 ; 272 ; 294, 296) empêchant sensiblement l'agent fluide de passer entre ladite surface extérieure (40, 258) dudit conduit mâle (22, 190, 240, 292) et ladite surface intérieure (74 ; 176, 178, 246) dudit élément femelle (24, 170, 242), et ladite attache (28, 200, 254) accouple une partie prédéterminée dudit conduit mâle (22, 190, 240, 292) à l'intérieur dudit élément femelle (24, 170, 242) de manière à empêcher un dégagement longitudinal involontaire de celui-ci.

2. Ensemble d'accouplement de conduit selon la revendication 1, dans lequel ladite attache (28, 200, 254) a une configuration à connexion rapide.

3. Ensemble d'accouplement de conduit selon la revendication 2, dans lequel ladite attache à connexion rapide (28, 200, 254) comprend :
ladite première section de fixation réalisée comme une paire de mâchoires intérieures (120) définissant une forme sensiblement semi-circulaire entre elles, lesdites mâchoires intérieures (120) étant fixées par pression à ladite surface extérieure (40, 258) dudit conduit mâle (22, 190, 240, 292) sensiblement autour de celle-ci ; et
ladite deuxième section de fixation réalisée comme une paire de mâchoires extérieures (122) entourant sensiblement ladite paire de mâchoires intérieures (120), ladite paire de mâchoires extérieures (122) définissant sensiblement une forme circulaire entre elles, ladite paire de mâchoires extérieures (122) étant reliée à ladite paire de mâchoires intérieures (120) par un segment en collet entre elles (124), ladite paire de mâchoires extérieures (122) comprenant en outre une paire d'extrémités distales avec un espace (126) entre elles, ladite paire de mâchoires extérieures (122) s'accouplant audit élément femelle (24, 170, 242).

4. Ensemble d'accouplement de conduit selon la revendication 2, dans lequel ladite attache à connexion rapide (28, 200, 254) comprend :
ladite première section de fixation formée d'une paire de mâchoires intérieures (150) définissant une forme sensiblement semi-circulaire entre elles, lesdites mâchoires intérieures (150) étant fixées par pression à ladite surface extérieure (40, 258) dudit conduit mâle (22, 190, 240, 292) sensiblement autour de celle-ci ; et
ladite deuxième section de fixation formée d'une paire de mâchoires extérieures (152) entourant sensiblement ladite paire de mâchoires intérieures (150), ladite paire de mâchoires extérieures (152) définissant sensiblement une forme circulaire entre elles, ladite paire de mâchoires extérieures (152) étant reliée à ladite paire de mâchoires intérieures (150) au niveau d'un coude (154) de celles-ci.

5. Ensemble d'accouplement de conduit selon la revendication 3 ou 4, dans lequel ladite attache (254) comprend :
une première bague de fixation auxiliaire (250) ayant une section de fixation intérieure (256) pouvant s'engager autour de ladite surface extérieure (258) dudit conduit mâle (240) et ayant une section extérieure (260) entourant sensiblement ladite section de fixation intérieure (256), ladite première bague auxiliaire (250) étant située entre ladite paire de mâchoires intérieures (120, 150) de ladite attache à fixation rapide (254) et ladite seconde partie élargie dudit conduit mâle (240) ; et
une deuxième bague de fixation auxiliaire (252) ayant une section de fixation intérieure (256) pouvant s'engager autour de ladite surface extérieure (258) dudit conduit mâle (240) et ayant une section extérieure (260) entourant sensiblement ladite section de fixation intérieure (256), ladite deuxième bague de fixation auxiliaire (252) étant située longitudinalement de façon adjacente à ladite paire de mâchoires intérieures (120, 150) de ladite attache (254) à l'opposé de ladite première bague de fixation auxiliaire (250).

6. Ensemble d'accouplement de conduit selon la revendication 5, dans lequel lesdites première et deuxième bagues de fixation auxiliaires (250, 252) ont une forme sensiblement annulaire et comportent une pluralité de fentes courbes (266) juxtaposées entre chacune desdites sections de fixation intérieures (256) et chacune desdites sections extérieures (260).

7. Ensemble d'accouplement de conduit selon l'une quelconque des précédentes revendications, dans lequel lesdits moyens d'étanchéité comprennent un premier joint d'étanchéité (26, 198, 272, 294) situé à l'extérieur de façon adjacente à ladite partie nominale (290) dudit conduit mâle (292).

8. Ensemble d'accouplement de conduit selon la revendication 7, dans lequel lesdits moyens d'étanchéité comprennent en outre un joint d'étanchéité supplémentaire (296) situé à l'extérieur de façon adjacente à ladite partie nominale (290) dudit conduit mâle (292).

9. Ensemble d'accouplement de conduit selon la revendication 8, comprenant en outre une rondelle (298) située entre lesdits premier et deuxième joints d'étanchéité (294, 296) de façon adjacente à ceux-ci.

10. Ensemble d'accouplement de conduit selon l'une quelconque des précédentes revendications, dans lequel :
ladite surface intérieure dudit élément femelle (170) est en outre définie par une première surface intérieure (176) et une deuxième surface intérieure (178), ladite deuxième surface intérieure (178) étant plus proche de ladite extrémité ouverte dudit élément femelle (170) que ladite première surface intérieure (176) située de façon adjacente à celle-ci dans le sens longitudinal ; et
ladite première partie de diamètre élargi (192) dudit conduit mâle (190) a un diamètre correspondant à ladite première surface intérieure (176) dudit élément femelle (170), et ladite deuxième partie de diamètre élargi (194) a un diamètre relativement plus grand correspondant à ladite deuxième surface intérieure (178) dudit élément femelle (170).

11. Ensemble d'accouplement de conduit selon l'une quelconque des précédentes revendications, dans lequel ledit élément femelle (24) comprend :
un logement (62) comportant un rebord (64) autour de celui-ci près de son extrémité ouverte ; et
un collier (66) adapté autour dudit logement (62) à proximité dudit rebord (64), ledit collier (66) comportant en outre un bras (92), tourné vers l'intérieur, qui définit un épaulement (94),
ladite deuxième section de fixation (122, 152) de ladite attache pouvant être accouplée entre ledit rebord (64) et ledit épaulement (94) dudit collier (66).

12. Ensemble d'accouplement de conduit selon l'une quelconque des précédentes revendications, dans lequel ledit élément femelle (170) comprend :
une surface d'entrée évasée tronconique (186) proche d'une extrémité ouverte dudit élément femelle (170) et ayant une partie resserrée ;
une surface intérieure intermédiaire (184) juxtaposée dans le sens longitudinal de façon adjacente à ladite partie resserrée de ladite surface d'entrée conique (186) ; et
un évidement rainuré (182) s'étendant radialement vers l'extérieur depuis ladite surface intermédiaire (184),
ladite deuxième section de fixation (122, 152) de ladite attache (200) pouvant être comprimée radialement par ladite surface d'entrée conique (186) pendant l'insertion longitudinale, et ladite deuxième section de fixation (122, 152) de ladite attache (200) s'engageant dans ledit évidement (182) quand elle est placée longitudinalement avec celui-ci.

13. Ensemble d'accouplement de conduit selon l'une quelconque des précédentes revendications, comprenant en outre des moyens (270) destinés à empêcher une translation longitudinale de ladite attache à connexion rapide le long dudit conduit mâle (240).

14. Ensemble d'accouplement de conduit selon la revendication 13, dans lequel lesdits moyens de prévention de translation comprennent une bague annulaire (270) fixée autour de ladite surface extérieure dudit conduit mâle (240).
